# FASCICULE DE BREVET EUROPEEN

(11) **EP 2 867 279 B1**
(45) Date de publication et mention de la délivrance du brevet: **23.08.2017**
(21) Numéro de dépôt: 13731394.6
(22) Date de dépôt: 07.06.2013
(51) Int. Cl.: B29L 7/00, C08J 5/18, B32B 5/02, B32B 27/12, B32B 27/40, B29C 49/00, B32B 3/26, B29C 47/00

(54) **UTILISATION D'UN ALLIAGE D'AMIDON THERMOPLASTIQUE ET DE TPE POUR LA FABRICATION D'UN FILM ULTRA-FIN IMPER-RESPIRANT ADHESIF**
VERWENDUNG EINER LEGIERUNG AUS THERMOPLASTISCHER STÄRKE UND TPE ZUR HERSTELLUNG EINES ULTRAFEINER KLEBRIGER UND ATMUNGSFÄHIGER FILM
USE OF AN ALLOY OF THERMOPLASTIC STARCH AND TPE FOR MAKING ULTRA FINE ADHESVE BREATHABLE FILM

(30) Priorité: 27.06.2012 FR 1256143
(43) Date de publication de la demande: 06.05.2015
(73) Titulaire: Arkema France, 92700 Colombes (FR)
(72) Inventeur: BRULE, Benoît, 27170 Beaumont-le-Roger (FR); LE, Guillaume, 14460 Colombelles (FR); BABIN, Perrine, 69006 Lyon (FR); CARTIER, Laurent B, Wayne, Pennsylvania 19087 (US); MALET, Frédéric, 69007 Lyon (FR)
(74) Mandataire: Hérard, Elise
(86) Numéro de dépôt international: PCT/FR2013/051321
(87) Numéro de publication internationale: WO 2014/001674

(56) Documents cités:
- WO-A2-2011/080623
- US-A- 5 800 928
- US-A- 5 908 690
- US-A1- 2009 092 816
- US-A1- 2011 311 743
- US-B1- 6 191 221

## Description

### DOMAINE TECHNIQUE

Le domaine technique auquel se rapporte l'invention est celui des films imper respirants utilisés dans le domaine textile.
Un tel film imper respirant, est à la fois perméable à la vapeur d'eau et imperméable à l'eau.

### ETAT DE LA TECHNIQUE

Nombreux sont les domaines techniques qui requièrent des textiles aux propriétés imper-respirantes améliorées et prolongées. On peut citer notamment le domaine médical, l'équipement médical, les blouses chirurgicales, tapis, matelas, pansements, les vêtements de protection ; l'agriculture, les films agricoles ; l'emballage, le packaging ; l'équipement militaire, l'équipement maritime, notamment les couvertures marines ; le transport, l'aéronautique, l'automobile ; le sport ; les loisirs ; l'informatique, l'électronique, l'ameublement ; la décoration ; l'équipement pour bébé ou pour enfant ; l'équipement d'extérieur ; l'isolation des murs d'un bâtiment, les films sous-toiture.

Un film imper-respirant est un film souple qui a pour rôle d'une part d'empêcher que des éléments extérieurs tels que les poussières, les pollens, le sable, la pluie et la neige ne s'infiltrent à travers le textile et d'autre part d'éviter que l'humidité produite, par exemple par l'activité humaine, ne s'accumule dans le textile. Ce film permet l'évacuation de la vapeur d'eau hors du textile. L'utilisation d'un film imper respirant permet d'avoir un textile qui respire et qui est donc sain pour ceux qui l'utilisent.

La perméabilité à la vapeur d'eau est évaluée à l'aide du paramètre MVTR (Moisture Vapor Transmission Rate). En particulier, il est souhaitable qu'un film imper-respirant présente une valeur de MVTR mesurée par la norme ASTM E96, d'au moins 70 g/m² pendant 24 heures à 23°C pour un taux d'humidité relative de 50% et une épaisseur de film de 25 µm. Pour les applications précitées, il est en particulier souhaitable que la perméabilité minimum soit d'au moins 350 g/m² dans les mêmes conditions de mesure, lorsque le film utilisé adhère sur la surface d'un textile. Il est également souhaitable que l'adhérence du film sur le textile ne soit pas altérée au fur et à mesure de l'utilisation du textile, notamment lorsque la quantité de vapeur d'eau à évacuer est plus importante en cas d'augmentation importante de la température. Autrement dit, on cherche un produit textile imper respirant qui ne soit pas facilement dégradé par une exposition prolongée à l'humidité. D'autre part, l'augmentation des propriétés imper respirantes et l'adhérence du film sur le textile ne doivent pas se faire au détriment de la souplesse ni de la finesse (épaisseur) du textile. On recherche donc un produit textile (ci-après textile traité ou produit stratifié) imper respirant présentant une forte perméabilité à la vapeur d'eau ainsi qu'une bonne durée de vie afin de garantir sa pérennité, tout en ayant l'aspect d'un textile « nu » sans traitement spécifique.

Les films connus sont fabriqués à partir de polymères synthétiques. Or, les polymères synthétiques sont fabriqués à partir de matières premières non-renouvelables. On cherche à limiter leur quantité dans la fabrication d'un film imper respirant. On recherche donc un film obtenu au moins partiellement à partir de matières premières naturelles (ou bio-ressourcées) et qui présente une perméabilité au moins aussi bonne que celle d'un film obtenu à partir de polymères synthétiques. En particulier, on cherche un film obtenu au moins partiellement à partir de matières premières naturelles, qui satisfasse aux exigences de perméabilité indiquées ci-dessus.

Enfin, les films de l'art antérieur sont obtenus par mise en forme d'un mélange comprenant différents polymères connus pour leurs propriétés imper respirantes. Par exemple, le document US 6 191 221 divulgue des films imper respirant à base de polyétherester et de copolymère éthylène - acétate de vinyle. La mise en forme peut s'effectuer selon tout procédé d'extrusion connu, tel que l'extrusion calandrage à plat, l'extrusion plaxage, l'extrusion soufflage. En général, malgré une forte puissance de chauffage, il n'est pas possible d'obtenir des films d'épaisseur inférieure à 25 µm On recherche donc un film imper respirant qui puisse être fabriqué facilement avec les dispositifs classiques de fabrication de films thermoplastiques et à une température de chauffage ou d'extrusion comprise dans la gamme de 100 à 300°C, de préférence comprise dans la gamme de 150°C à 250°C.

### DESCRIPTION DE L'INVENTION

La présente invention a donc pour objet l'utilisation d'amidon thermoplastique pour la fabrication d'un film ultra-fin imper respirant et adhésif, notamment sur la surface d'au moins un matériau textile, ledit amidon thermoplastique se présentant sous la forme d'un alliage avec du TPE hydrophile comprenant au moins 10%, de préférence au moins 20%, de préférence au moins 30%, de préférence au moins 40%, de préférence au moins 50%, en poids de polyéthylène glycol (PEG) sur le poids du TPE.
Les polymères thermoplastiques élastomères (nommés TPE dans la présente description) utilisables dans l'alliage selon l'invention peuvent être choisis parmi (a) les copolymères à blocs polyesters et blocs polyéthers (ci-après COPE ou copolyétheresters), (b) les copolymères à blocs polyuréthanes et blocs polyéthers ou polyesters (appelés aussi TPU abréviation de polyuréthanes thermoplastiques) et (c) les copolymères à blocs polyamide et blocs polyéther (appelés aussi PEBA selon l'IUPAC).
Par TPE hydrophile on entend un TPE comprenant au moins 10%, de préférence au moins 20%, de préférence au moins 30%, de préférence au moins 40%, de préférence au moins 50%, en poids de polyéthylène glycol (PEG) sur le poids du TPE.
(a) S'agissant des COPE ou copolyétheresters, ce sont des copolymères à blocs polyesters et blocs polyéthers. Ils sont constitués de blocs polyéthers souples issus de polyétherdiols et de blocs polyesters rigides qui résultent de la réaction d'au moins un diacide carboxylique avec au moins un motif diol court allongeur de chaîne. Les blocs polyesters et les blocs polyéthers sont reliés par des liaisons esters résultant de la réaction des fonctions acides de l'acide dicarboxylique avec les fonctions OH du polyétherdiol. L'enchaînement des polyéthers et des diacides forme les blocs souples alors que l'enchaînement du glycol ou du butane diol avec les diacides forme les blocs rigides du copolyétherester. Le diol court allongeur de chaîne peut être choisi dans le groupe constitué du neopentylglycol, du cyclohexanediméthanol et des glycols aliphatiques de formule HO(CH2)nOH dans laquelle n est un entier valant de 2 à 10.
   Avantageusement, les diacides sont des acides dicarboxyliques aromatiques ayant de 8 à 14 atomes de carbone. Jusqu'à 50 % en mole de l'acide aromatique dicarboxylique peut être remplacé par au moins un autre acide aromatique dicarboxylique ayant de 8 à 14 atomes de carbone, et/ou jusqu'à 20 % en mole peut être remplacé par un acide aliphatique dicarboxylique ayant de 2 à 14 atomes de carbone.
   A titre d'exemple d'acides aromatiques dicarboxyliques, on peut citer l'acide téréphtalique, isophtalique, bibenzoïque, naphtalène dicarboxylique, l'acide 4,4'-diphénylenedicarboxylique, l'acide bis(p-carboxyphényl) méthane, l'éthylène bis p-benzoïque acide, l'acide 1-4 tétraméthylène bis(p-oxybenzoïque), l'acide éthylène bis (p-oxybenzoïque), l'acide 1,3-triméthylène bis (p-oxybenzoique).
   A titre d'exemple de glycols, on peut citer l'éthylène glycol, le 1,3-triméthylène glycol, le 1,4-tétraméthylèneglycol, le 1,6-hexaméthylène glycol, le 1,3 propylène glycol, le 1,8 octaméthylèneglycol, le 1,10-décaméthylène glycol et le 1,4-cyclohexylène diméthanol. Les copolymères à blocs polyesters et blocs polyéther sont, par exemple, des copolymères ayant des motifs polyéthers dérivés de polyétherdiols tels que le polyéthylène glycol (PEG), le polypropylène glycol (PPG), le polytriméthylène glycol (PO3G) ou le polytétraméthylène glycol (PTMG), des motifs diacide carboxylique tels que l'acide téréphtalique et des motifs glycol (éthane diol) ou butane diol, 1-4. De tels copolyétheresters sont décrits dans les brevets EP 402 883 et EP 405 227. Ces polyétheresters sont des élastomères thermoplastiques. Ils peuvent contenir des plastifiants.
(b) S'agissant des TPU, on peut citer les polyétheruréthanes qui résultent de la condensation de blocs polyéthers souples qui sont des polyétherdiols et de blocs rigides polyuréthanes issus de la réaction d'au moins un diisocyanate pouvant être choisi parmi les diisocyanate aromatiques (ex : MDI, TDI) et les diisocyanates aliphatiques (ex : HDI ou hexaméthylènediisocyanate) avec au moins un diol court. Le diol court allongeur de chaîne peut être choisi parmi les glycols cités plus haut dans la description des copolyétheresters.
   Les blocs polyuréthanes et les blocs polyéthers sont reliés par des liaisons résultant de la réaction des fonctions isocyanates avec les fonctions OH du polyétherdiol.
   On peut encore citer les polyesteruréthanes qui résultent de la condensation de blocs polyesters souples qui sont des polyesterdiols et de blocs rigides polyuréthanes issus de la réaction d'au moins un diisocyanate avec au moins un diol court. Les polyesterdiols résultent de la condensation de diacides carboxyliques avantageusement choisis parmi les diacides aliphatiques dicarboxyliques ayant de 2 à 14 atomes de carbone et de glycols qui sont des diols courts allongeurs de chaîne choisis parmi les glycols cités plus haut dans la description des copolyétheresters. Ils peuvent contenir des plastifiants.
(c) S'agissant des « PEBA », ou copolymères à blocs polyéther et blocs polyamide, ils résultent de la polycondensation de blocs polyamides à extrémités réactives avec des blocs polyéthers à extrémités réactives, telles que, entre autres :
   1) blocs polyamides à bouts de chaîne diamines avec des blocs polyoxyalkylènes à bouts de chaînes dicarboxyliques ;
   2) blocs polyamides à bouts de chaînes dicarboxyliques avec des blocs polyoxyalkylènes à bouts de chaînes diamines, obtenues par cyanoéthylation et hydrogénation de blocs polyoxyalkylène alpha-oméga dihydroxylées aliphatiques appelées polyétherdiols ;
   3) blocs polyamides à bouts de chaînes dicarboxyliques avec des polyétherdiols, les produits obtenus étant, dans ce cas particulier, des polyétheresteramides.

Les blocs polyamides à bouts de chaînes dicarboxyliques proviennent, par exemple, de la condensation de précurseurs de polyamides en présence d'un diacide carboxylique limiteur de chaîne. Les blocs polyamides à bouts de chaînes diamines proviennent par exemple de la condensation de précurseurs de polyamides en présence d'une diamine limiteur de chaîne.

La masse molaire en nombre Mn des blocs polyamides est comprise entre 400 et 20000 g/mole et de préférence entre 500 et 10000 g/mole.

Les polymères à blocs polyamides et blocs polyéthers peuvent aussi comprendre des motifs répartis de façon aléatoire.

On peut utiliser avantageusement trois types de blocs polyamides.

Selon un premier type, les blocs polyamides proviennent de la condensation d'un diacide carboxylique, en particulier ceux ayant de 4 à 20 atomes de carbone, de préférence ceux ayant de 6 à 18 atomes de carbone et d'une diamine aliphatique ou aromatique, en particulier celles ayant de 2 à 20 atomes de carbone, de préférence celles ayant de 6 à 14 atomes de carbone.

A titre d'exemples d'acides dicarboxyliques, on peut citer l'acide 1,4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés.

A titre d'exemples de diamines, on peut citer la tétraméthylène diamine, l'hexaméthylènediamine, la 1,10-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), et para-amino-di-cyclo-hexyl-méthane (PACM), et l'isophoronediamine (IPDA), la 2,6-bis-(aminométhyl)-norbornane (BAMN) et la pipérazine (Pip).

Avantageusement, on a des blocs PA4.12, PA4.14, PA4.18, PA6.10, PA6.12, PA6.14, PA6.18, PA9.12, PA10.10, PA10.12, PA10.14 et PA10.18, le premier chiffre indiquant le nombre d'atomes de carbone de la diamine et le second chiffre, le nombre d'atomes de carbone de l'acide carboxylique.

Selon un deuxième type, les blocs polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone ou d'une diamine. A titre d'exemples de lactames, on peut citer le caprolactame, l'oenantholactame et le lauryllactame. A titre d'exemples d'acide alpha omega amino carboxylique, on peut citer les acides aminocaproïque, amino-7-heptanoïque, amino-11-undécanoïque et amino-12-dodécanoïque.

Avantageusement les blocs polyamides du deuxième type sont en polyamide 11, en polyamide 12 ou en polyamide 6.

Selon un troisième type, les blocs polyamides résultent de la condensation d'au moins un acide alpha oméga aminocarboxylique (ou un lactame), au moins une diamine et au moins un diacide carboxylique.

Dans ce cas, on prépare, les blocs polyamide PA par polycondensation :
- de la ou des diamines aliphatiques linéaires ou aromatiques ayant X atomes de carbone ;
- du ou des diacides carboxyliques ayant Y atomes de carbone ; et
- du ou des comonomères {Z}, choisis parmi les lactames et les acides alpha-oméga aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y),
- ledit ou lesdits comonomères {Z} étant introduits dans une proportion pondérale allant jusqu'à 50%, de préférence jusqu'à 20%, encore plus avantageusement jusqu'à 10% par rapport à l'ensemble des monomères précurseurs de polyamide ;
- en présence d'un limiteur de chaîne choisi parmi les diacides carboxyliques ;

Avantageusement, on utilise comme limiteur de chaîne le diacide carboxylique ayant Y atomes de carbone, que l'on introduit en excès par rapport à la stoechiométrie de la ou des diamines.

Selon une variante de ce troisième type, les blocs polyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne. A titre d'exemple d'acide alpha omega amino carboxylique aliphatique, on peut citer les acides aminocaproïques, amino-7-heptanoïque, amino-11-undécanoïque et amino-12-dodécanoïque. A titre d'exemple de lactame, on peut citer le caprolactame, l'oenantholactame et le lauryllactame. A titre d'exemple de diamines aliphatiques, on peut citer l'hexaméthylènediamine, la dodécaméthylènediamine et la triméthylhexaméthylène diamine. A titre d'exemple de diacides cycloaliphatiques, on peut citer l'acide 1,4-cyclohexyldicarboxylique. A titre d'exemple de diacides aliphatiques, on peut citer les acides butane-dioïque, adipique, azélaïque, subérique, sébacique, dodécanedicarboxylique, les acides gras dimérisés (ces acides gras dimérisés ont de préférence une teneur en dimère d'au moins 98%; de préférence ils sont hydrogénés; ils sont commercialisés sous la marque PRIPOL® par la société UNICHEMA, ou sous la marque EMPOL® par la société HENKEL) et les Polyoxyalkylènes - alpha, omega diacides. A titre d'exemple de diacides aromatiques, on peut citer les acides téréphtalique (T) et isophtalique (I). A titre d'exemple de diamines cycloaliphatiques, on peut citer les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA), la 2,6-bis-(aminométhyl)-norbomane (BAMN) et la pipérazine.

A titre d'exemples de blocs polyamides du troisième type, on peut citer les suivantes :
- 6.6/6 dans laquelle 6.6 désigne des motifs hexaméthylènediamine condensés avec l'acide adipique. 6 désigne des motifs résultant de la condensation du caprolactame.
- 6.6/6.10/11/12 dans laquelle 6.6 désigne l'hexaméthylènediamine condensée avec l'acide adipique. 6.10 désigne l'hexaméthylènediamine condensée avec l'acide sébacique. 11 désigne des motifs résultant de la condensation de l'acide aminoundécanoïque. 12 désigne des motifs résultant de la condensation du lauryllactame.

De préférence, le polymère comprend de 1 à 80 % en masse de blocs polyéther et de 20 à 99 % en masse de blocs polyamide, de préférence de 4 à 80 % en masse de blocs polyéther et 20 à 96 % en masse de blocs polyamide, de préférence encore de 30 à 60% en masse de blocs polyéther et de 40 à 70% en masse de blocs polyamide. La masse Mn des blocs polyéther est comprise entre 100 et 6 000 g/mole et de préférence entre 200 et 3 000 g/mole.

Les blocs polyéthers sont constitués de motifs oxyde d'alkylène. Ces motifs peuvent être par exemple des motifs oxyde d'éthylène, des motifs oxyde de propylène ou tétrahydrofurane (qui conduit aux enchaînements polytétraméthylène glycol). On utilise ainsi des blocs PEG (polyéthylène glycol), c'est-à-dire ceux constitués de motifs oxyde d'éthylène, des blocs PPG (propylène glycol), c'est-à-dire ceux constitués de motifs oxyde de propylène, des blocs PO3G (polytriméthylène glycol), c'est-à-dire ceux constitués de motifs polytriméthylène ether de glycol (de tels copolymères avec des blocs polytriméthylene ether sont décrits dans le document US 6590065), et des blocs PTMG c'est-à-dire ceux constitués de motifs tétraméthylène glycols appelés aussi polytétrahydrofurane. Les copolymères PEBA peuvent comprendre dans leur chaîne plusieurs types de polyéthers, les copolyéthers pouvant être à blocs ou statistiques. La perméabilité à la vapeur d'eau du copolymère PEBA augmente avec la quantité de blocs polyéther et varie en fonction de la nature de ces blocs. On préfère utiliser un bloc polyéther de polyéthylène glycol qui permet d'obtenir un PEBA présentant une bonne perméabilité.

Les blocs polyéthers peuvent aussi être constitués d'amines primaires éthoxylées. A titre d'exemple d'amines primaires éthoxylées on peut citer les produits de formule : 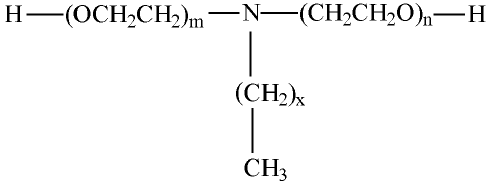 dans laquelle m et n sont compris entre 1 et 20 et x entre 8 et 18. Ces produits sont disponibles dans le commerce sous la marque Noramox® de la société CECA et sous la marque Genamin® de la société Clariant.

Les blocs souples polyéthers peuvent comprendre des blocs polyoxyalkylène à bouts de chaînes NH₂, de tels blocs pouvant être obtenus par cyanoacétylation de blocs polyoxyalkylène alpha-oméga dihydroxylés aliphatiques appelées polyétherdiols. Plus particulièrement, on pourra utiliser les Jeffamines (Par exemple Jeffamine® D400, D2000, ED 2003, XTJ 542, produits commerciaux de la société Huntsman, également décrites dans les documents de brevets JP2004346274, JP2004352794 et EP1482011).

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. La méthode générale de préparation en deux étapes des copolymères PEBA ayant des liaisons ester entre les blocs PA et les blocs PE est connue et est décrite, par exemple, dans le brevet français FR2846332. La méthode générale de préparation des copolymères PEBA de l'invention ayant des liaisons amide entre les blocs PA et les blocs PE est connue et décrite, par exemple dans le brevet européen EP1482011. Les blocs polyéther peuvent être aussi mélangés avec des précurseurs de polyamide et un limiteur de chaîne diacide pour faire les polymères à blocs polyamides et blocs polyéthers ayant des motifs répartis de façon statistique (procédé en une étape).

Bien entendu, la désignation PEBA dans la présente description de l'invention se rapporte aussi bien aux PEBAX® commercialisés par Arkema, aux Vestamid® commercialisés par Evonik®, aux Grilamid® commercialisés par EMS, qu'aux Kellaflex® commercialisés par DSM ou à tout autre PEBA d'autres fournisseurs.

Avantageusement, les copolymères PEBA ont des blocs PA en PA 6, en PA 11, en PA 12, PA 6.12, en PA 6.6/6, en PA 10.10 et/ou en PA 6.14, de préférence des blocs PA 11 et/ou PA 12; et des blocs PE en PTMG, en PPG et/ou en PO3G. Les PEBA à base de blocs PE constitués majoritairement de PEG sont à ranger dans la gamme des PEBA hydrophiles. Les PEBA à base de blocs PE constitués majoritairement de PTMG sont à ranger dans la gamme des PEBA hydrophobes.

Avantageusement, ledit PEBA utilisé dans la composition selon l'invention est obtenu au moins partiellement à partir de matières premières bio-ressourcées. Par matières premières d'origine renouvelable ou matières premières bio-ressourcées, on entend des matériaux qui comprennent du carbone bio-ressourcé ou carbone d'origine renouvelable. En effet, à la différence des matériaux issus de matières fossiles, les matériaux composés de matières premières renouvelables contiennent du ¹⁴C. La « teneur en carbone d'origine renouvelable » ou « teneur en carbone bio-ressourcé » est déterminée en application des normes ASTM D 6866 (ASTM D 6866-06) et ASTM D 7026 (ASTM D 7026-04). A titre d'exemple, les PEBA à base de polyamide 11 proviennent au moins en partie de matières premières bio-ressourcées et présentent une teneur en carbone bio-ressourcé d'au moins 1%, ce qui correspond à un ratio isotopique de ¹²C/¹⁴C d'au moins 1,2 x 10⁻¹⁴. De préférence, les PEBA selon l'invention comprennent au moins 50% en masse de carbone bio-ressourcé sur la masse totale de carbone, ce qui correspond à un ratio isotopique ¹²C/¹⁴C d'au moins 0,6x10⁻¹². Cette teneur est avantageusement plus élevée, notamment jusqu'à 100%, qui correspond à un ratio isotopique ¹²C/¹⁴C de 1,2 x 10⁻¹², dans le cas de PEBA à blocs PA 11 et blocs PE comprenant du PO3G, PTMG et/ou PPG issus de matières premières d'origine renouvelable.
Selon un mode de réalisation avantageux de l'invention, le TPE hydrophile comprend :
- de 1 à 100 %, de préférence de 50 à 100%, de copolymère à blocs polyuréthanes et blocs PEG (TPU) et
- de 99 à 0 %, de préférence de 50 à 0% d'au moins un autre TPE hydrophile choisi parmi les copolymères à blocs polyamide et blocs PEG (PEBA), les copolymères à blocs polyesters et blocs PEG (COPE), et leurs mélanges,
sur le poids du TPE hydrophile.

Selon un mode de réalisation avantageux, l'alliage utilisé dans la présente invention comprend au moins un de ces TPE, éventuellement mélangé(s) avec au moins une polyoléfine fonctionnalisée. Selon un mode de réalisation particulier, l'alliage, et par suite le film, selon l'invention comprend en outre une polyoléfine fonctionnalisée, c'est-à-dire comportant un greffage par un monomère choisi dans le groupe comprenant les acides carboxyliques insaturés, les anhydrides carboxyliques insaturés, les monomères vinyliques, les monomères acryliques, ou un mélange de ceux-ci. De préférence, la polyoléfine (fonctionnalisée) est choisie dans le groupe comprenant les copolymères éthylène-ester acrylique, les copolymères éthylène-ester acrylique-anhydride maléique, les copolymères éthylène-ester acrylique-méthacrylate de glycidyle, ces copolymères étant greffés/fonctionnalisés comme décrit ci-dessus. Avantageusement, la polyoléfine fonctionnalisée utilisée est choisie parmi celles décrites et revendiquées dans la demande de brevet FR2959939A1.

Par amidon thermoplastique, ci-après nommé « TPS », on entend de l'amidon natif transformé en matériau processable par plastification en présence d'une faible quantité d'eau. L'amidon plastifié appelé «amidon thermoplastique» est obtenu notamment avec un plastifiant non volatil tel que le glycérol. Ce matériau a de nombreux avantages tels que son prix, son caractère biodégradable et son origine issue de ressources renouvelables abondantes. Il peut être mis en oeuvre par des outils conventionnels de la plasturgie. Malheureusement, l'amidon plastifié possède quelques limites importantes telles que sa forte sensibilité à l'eau, des propriétés mécaniques et des propriétés adhésives limitées par rapport à un thermoplastique classique et un vieillissement très long, après sa mise en oeuvre, avant une stabilisation de ses propriétés (phénomènes de rétrogradation ou de densification). Son utilisation sous forme d'alliage selon l'invention permet de pallier ces inconvénients grâce à la formulation de l'amidon avec d'autres composés et l'utilisation du procédé selon l'invention. Selon un mode de réalisation préféré, le pourcentage d'amidon thermoplastique dans l'alliage utilisé représente de 10% à 90% du poids de l'alliage, de préférence de 30 à 80%, de préférence encore de 40 à 70 %, de préférence encore de 50 à 70 % du poids de l'alliage.
Tout type d'amidon peut être utilisé dans l'invention. Ce peut être de l'amidon de maïs, de pomme de terre, de blé, de tapioca, de pois. L'amidon peut être modifié par greffage de groupements chimiques. Il peut être employé dans les différentes formes suivantes :
- l'amidon natif (non modifié): les grains d'amidon sont le siège de l'organisation semi-cristalline des deux polymères constitutifs que sont l'amylose et l'amylopectine. Le degré de polymérisation et la proportion d'amylose varient selon l'origine botanique de l'amidon.
- l'amidon gélatinisé : lors d'un chauffage voisin de 80°C en milieu aqueux, l'amidon s'hydrate et gonfle. Une partie de l'amylose, puis de l'amylopectine passe en solution (empesage). La suspension devient alors visqueuse, l'amidon devient plus facilement hydrolysable.
- l'amidon gélifié - l'amidon rétrogradé : lorsque la température de la solution aqueuse diminue, le système se gélifie puis se réorganise en une structure semi-cristalline (rétrogradation). Ces molécules réorganisées sont formées d'amylose, d'amylopectine et de cristaux mixtes amylose-amylopectine.
- l'amidon destructuré, forme dans laquelle les polymères d'amylose et d'amylopectine sont dispersés.

En plus de l'utilisation d'amidon qui est une matière naturelle, l'utilisation de polymères PEBA préparés à partir de blocs polyamide et/ou polyéther au moins partiellement bio-ressourcés permet d'augmenter davantage la quantité de matières naturelles dans le film selon l'invention.

L'alliage selon l'invention peut être préparé par toute méthode, qui rend possible l'obtention d'un mélange intime ou homogène contenant l'amidon thermoplastique et ledit au moins un TPE hydrophile selon l'invention, et éventuellement un(des) additif(s) et/ou un(des) agent(s) compatibilisant(s), telle que le compoundage à l'état fondu, l'extrusion, le compactage, ou encore le malaxeur à rouleau.
Plus particulièrement, l'alliage selon l'invention est préparé par mélange à l'état fondu de tous les ingrédients (amidon, plastifiant, eau, TPE, et éventuels compatibilisant(s) et additif (s)) dans un procédé dit « en direct ». On peut aussi préparer l'alliage selon un procédé en deux étapes, la première consistant en un mélange concentré de l'amidon, plastifiant et eau, pour former une matrice TPS, puis diluer le TPS par mélange avec la matrice TPE dans une seconde étape.
On utilise avantageusement les dispositifs habituels de mélange et de malaxage de l'industrie des thermoplastiques tels que les extrudeuses, les extrudeuses de type bi-vis, notamment les extrudeuses bi-vis co-rotatives engrenantes auto-nettoyantes, et les malaxeurs, par exemple les co-malaxeurs de marque BUSS ou les mélangeurs internes. Dans ce procédé, les ingrédients peuvent être soit mélangés à sec et introduits dans la trémie d'alimentation ou alors le TPE hydrophile peut être introduit par gavage latéral dans le TPS ou dans un mélange amidon+plastifiant+eau préalablement fondu.
Il est recommandé que la préparation des alliages de l'invention (le compoundage) et leur mise en oeuvre soient faites dans les conditions les plus douces possibles en terme de température et de taux de cisaillement. Pour ce faire, on peut se reporter à la référence : O. Schacker, Plastics Additives and Compounding, April 2002, pages 28-33.
Les alliages selon l'invention présentent un excellent rapport performance/coût pour obtenir de nouveaux matériaux imper-respirants. Selon les ratios utilisés TPE/TPS on obtient des performances différentes. Afin d'améliorer la compatibilité du mélange l'ajout de compatibilisants. Cette dernière est préférée dans la présente invention.
Contrairement aux multicouches fabriqués par coextrusion d'amidon plastifié et de polymères thermoplastiques, les alliages selon l'invention n'ont pas de problèmes d'instabilités interfaciales dus notamment aux différences de comportement chimique et rhéologique des matériaux mis en présence dans la filière. De plus, les alliages selon l'invention n'ont pas les problèmes de diminution des propriétés d'hydrophilie généralement rencontrés avec les biocomposites. En effet, l'introduction de fibres ligno-cellulosiques dans des biopolyesters ou dans une matrice d'amidon plastifié entraine une diminution des propriétés d'hydrophilie liée à la présence des fibres plus hydrophobes.

La présente invention a également pour objet un film ultra fin, imper respirant et adhésif, caractérisé en ce qu'il comprend un alliage d'amidon thermoplastique et de TPE hydrophile, ledit TPE comprenant au moins 10%, de préférence au moins 20%, de préférence au moins 30%, de préférence au moins 40%, de préférence au moins 50%, en poids de polyéthylène glycol (PEG) sur le poids du TPE. Avantageusement, le pourcentage d'amidon thermoplastique représente 10% à 90%, et le pourcentage de TPE hydrophile représente de 90% à 10%, du poids de l'alliage dans le film.

Selon un mode de réalisation, le film imper respirant de l'invention est préparé directement après la fabrication de l'alliage selon les étapes suivantes : préparer un mélange du ou des TPE(s) avec de l'amidon thermoplastique (ou de l'amidon de l'eau et un plastifiant), puis faire fondre le mélange par chauffage à une température supérieure à la température de fusion du ou des polymère(s) et à la température de fusion de l'amidon, de façon à former un mélange homogène sous forme d'alliage. Puis, on étire l'alliage thermoplastique obtenu pour former un film. Le chauffage du ou des TPE peut être effectué séparément de l'étape de chauffage de l'amidon, le ou les TPE fondus et l'amidon étant ensuite mélangés.

Selon un mode de réalisation préféré du procédé de l'invention, on réalise les étapes suivantes :
a) mise à disposition d'un mélange d'amidon, de plastifiant et d'eau ;
b) mise à disposition de TPE hydrophile tel que défini ci-dessus ;
c) extrusion du mélange de l'étape a) puis ajout du TPE de l'étape b) au mélange en fin d'extrusion, généralement à une température supérieure à la température de fusion du ou des polymère(s) de l'étape a) et à la température de fusion de l'amidon ;
d) étirement du mélange pour former un film.
De préférence, l'étape c) est effectuée à une température comprise dans la gamme de 100°C à 300°C, de préférence de 150 à 250°C.
Selon un mode de réalisation, l'étape d'étirement du mélange est effectuée par extrusion soufflage. Selon un mode de réalisation alternatif, l'étape d'étirement du mélange est effectuée par extrusion à plat.
Le procédé de l'invention permet de maintenir le TPE à une température suffisamment élevée, supérieure au point de fusion du TPE hydrophile pour obtenir des films ultra-fins c'est-à-dire d'épaisseur inférieure ou égale à 25 µm, tout en limitant le risque de dégradation de l'amidon et du ou des TPE(s). De préférence, la température de chauffage ou d'extrusion avant étirement du film est comprise dans la gamme de 100°C à 300°C, de préférence de 150 à 250°C.
Avantageusement, le film imper respirant selon l'invention a une épaisseur inférieure ou égale à 25 µm, de préférence comprise dans la gamme de 5 à 25 µm
L'invention a également pour objet un produit stratifié (ci-après stratifié) comprenant au moins un matériau textile et au moins un film imper respirant selon l'invention, ledit film adhérent sur au moins une surface du matériau textile avec une force de pelage comprise dans la gamme de 0,5 à 50 N, de préférence de 0,5 à 10 N.
Avantageusement, le film selon l'invention est notamment appliqué sur un matériau textile par tout procédé connu, de préférence sans utiliser de colle entre le film et le textile. On peut citer à titre d'exemple l'extrusion couchage d'un film de l'alliage sur le textile, ou le pressage à chaud (thermo-lamination ou lamination avec une colle) du film sur un textile ou entre deux textiles, à une température suffisante pour que le film s'imprègne et emprisonne les fibres du textile. Selon un mode de réalisation alternatif ou combiné au(x) précédent(s), on peut également citer le collage à l'aide d'un joint de colle, de préférence un joint de colle aqueux, c'est-à-dire comprenant moins de 5% en poids de solvant sur la composition de joint de colle. Il s'avère que les films utilisant un alliage selon l'invention présentent une meilleure adhérence sur textile, même sans colle, par rapport aux films imper respirants existants.
Selon un mode de réalisation préféré, le procédé de mise en oeuvre des alliages utilisés pour l'obtention de matériaux imper-respirants et des stratifiés selon l'invention, se caractérise en ce que les compositions sont appliquées sur une ligne d'extrusion-cast ou d'extrusion-blown, à l'état fondu, à une température d'au moins 120°C pour former un film ayant une épaisseur minimale de 5 µm. Ce type de procédé permet aussi d'optimiser les conditions de transformation pour préparer des films les plus fins possible, avantageusement entre 5 et 50 µm d'épaisseur, de préférence d'épaisseur comprise dans la gamme de 5 à 25 µm, issus de mélanges en ligne des matériaux selon l'invention dilués en proportions variées et sans avoir de micro-perforations. En jouant avec les paramètres température et vitesse de tirage de la ligne, on peut contrôler l'épaisseur des films. Selon un autre mode de réalisation préféré, le procédé de mise en oeuvre des compositions utilisées pour l'obtention de films et stratifiés imper-respirants selon l'invention, se caractérise en ce que les compositions sont appliquées à l'état fondu sur une ligne d'extrusion-couchage sur un textile, ou d'extrusion-lamination entre deux textiles, tel qu'un non-tissé en matériau fibreux et/ou tout autre matériau textile, y-compris le papier, pour former un complexe de grammage d'au moins 5 g/m². Selon un procédé connu, le film selon l'invention est extrudé puis couché à l'état fondu sur le textile. De préférence, le film présente une épaisseur comprise entre 5 et 50 µm, et de préférence entre environ 5 et 10 µm. Avantageusement, dans le cadre d'une application par extrusion-couchage, on dépose de 10 à 50 g/m² de film thermoplastique sur le textile.
Dans la présente description de l'invention, on entend :
- Par « matériau textile » ou « textile », tout matériau réalisé à partir de fibres ou de filaments ainsi que tout matériau, y-compris le papier et le carton, formant une membrane poreuse caractérisée par un rapport longueur/épaisseur d'au moins 300, ;
- Par « fibre », toute matière synthétique ou naturelle, caractérisée par un rapport longueur/diamètre d'au moins 300 ;
- Par « filament », toute fibre de longueur infinie ;
Parmi les textiles, on trouve notamment des mats de fibres (les pansements, les filtres, le feutre), des mèches (pansements) des fils (à coudre, à tricoter, à tisser), des tricots (rectiligne, circulaire, fullyfashioned) des tissus (traditionnel, Jacquard, multiple, double face, multi axial, 2D et demi, 3D), et bien d'autres. Selon un mode de réalisation préféré de l'invention, ledit au moins un matériau textile se présente sous la forme d'une membrane poreuse, d'un textile tissé ou d'un textile non tissé.
Avantageusement, ledit au moins un matériau textile comprend des fibres synthétiques, notamment des fibres synthétiques obtenues à partir de matières premières bio-ressourcées, des fibres naturelles, des fibres artificielles fabriquées à partir de matières premières naturelles, des fibres minérales, et/ou des fibres métalliques.

Avantageusement, ledit textile comprend des fibres synthétiques obtenues à partir de matières premières bio-ressourcées, telles que des fibres de polyamide, notamment de polyamide 11. Avantageusement, ledit textile comprend en outre des fibres naturelles, telles que du coton, de la laine et/ou de la soie, des fibres artificielles fabriquées à partir de matières premières naturelles, des fibres minérales, telles que des fibres de carbone, de verre, de silice et/ou de magnésium.

De préférence, ledit matériau textile, quelle que soit sa forme, est fabriqué à partir d'au moins une des matières suivantes : du polypropylène, du polyéther, du polyester et/ou du coton.

Le textile est notamment choisi parmi des étoffes ou des surfaces textiles, telles que des surfaces tissées, tricotées, non-tissées ou tapis. Ces articles peuvent être par exemple des moquettes, des tapis, des revêtements d'ameublement, des revêtements de surface, les canapés, des rideaux, de la literie, des matelas et oreillers, des vêtements et des matériaux textiles médicaux.

Le textile selon l'invention constitue avantageusement un feutre, un filtre, un film, une gaze, une toile, un pansement, une couche, un tissu, un tricot, un article d'habillement, un vêtement, un article de literie, un article d'ameublement, un rideau, un revêtement d'habitacle, un textile technique fonctionnel, un géotextile et/ou un agrotextile.
Ledit textile est avantageusement utilisé dans le domaine médical, l'hygiène, la bagagerie, la confection, l'habillement, l'équipement ménager ou de la maison, l'ameublement, les moquettes, l'automobile, l'industrie, notamment la filtration industrielle, l'agriculture et/ou le bâtiment.

Un tel film présente à la fois une bonne durabilité ainsi qu'une meilleure perméabilité à la vapeur d'eau. Le film conserve au cours du temps sa propriété de barrière contre les éléments extérieurs qui pourraient s'infiltrer dans le textile. L'amélioration de la perméabilité du film à la vapeur d'eau favorise la ventilation à travers le textile.

### EXEMPLES

Des films imper respirants ont été préparés à partir de mélanges comprenant diverses proportions d'un TPU, d'un copolyéther bloc amide PEBA, d'une polyoléfine fonctionnalisée et d'amidon thermoplastique. Le TPU utilisé dans les exemples ci-dessous est un grade Desmopan DP9370A commercialisé par Bayer. Le TPE utilisé dans les exemples ci-dessous appartient à la gamme des PEBA hydrophiles commercialisés par Arkema, et en particulier ceux dont le bloc polyéther dérive du polyéthylène glycol. Il s'agit ici du Pebax® MV3000. La polyoléfine fonctionnalisée est le Lotryl® 20MA08 qui est un copolymère d'éthylène avec de l'acrylate de n-methyle à une teneur pondérale d'acrylate de 20% et ayant un MFI de 8 g/10 min (190°C/2,16 kg). L'amidon utilisé est de l'amidon modifié (TPS 3947) commercialisé par la Société Roquette.

L'imper-respirabilité (ou MVTR) des différents films de compositions A à I est mesurée selon la norme ASTM E96, méthode BW 38°C / 50 % Humidité Relative, rapportée à un film de 25 µm.

L'adhérence des substrats est directement liée aux valeurs de forces de pelage. On a effectué sur les stratifiés de chacun des essais A à I un essai de pelage (selon la norme ISO11339), sur une bande de 15 mm de stratifiée amorcée puis tirée à une vitesse 200 de mm/minute. Les essais de pelage sont faits de préférence dans un délai compris entre 2 heures et 48 heures après la fabrication d'un stratifié comprenant un film de 25 µm adhésif, par extrusion couchage, sur un textile non tissé de polypropylène.

Le Tableau 1 ci-dessous récapitule les compositions des différents mélanges préparés. Les exemples A-E sont comparatifs. Les exemples F à I sont selon l'invention.

**Tableau 1**

| | Essais | % en poids de TPU (base PEG) | % en poids de TPE (Pebax base PEG) | % en poids de POF | % en poids d'amidon thermoplastique (TPS) | épaisseur du film (µm) | Imper-respirabilité MVTR (g/m² /jour) normalisé a 25 µm | Adhérence sur le textile : Force de pelage (N/15mm) |
|---|---|---|---|---|---|---|---|---|
| Exemples comparatifs | A | 100 | 0 | 0 | 0 | 25 | 420 | 0,5 |
| | B | 70 | 0 | 30 | 0 | 20 | 210 | 0,8 |
| | C | 50 | 0 | 50 | 0 | 20 | 105 | 1,5 |
| | D | 70 | 30 | 0 | 0 | 30 | 560 | 0,6 |
| | E | 25 | 25 | 50 | 0 | 20 | 140 | 1,7 |
| Exemples selon l'invention | F | 50 | 0 | 0 | 50 | 25 | 1050 | 0,8 |
| | G | 60 | 0 | 0 | 40 | 25 | 770 | 0,8 |
| | H | 70 | 0 | 0 | 30 | 25 | 630 | 0,7 |
| | I | 40 | 0 | 20 | 40 | 20 | 525 | 1,0 |
| | J | 20 | 20 | 20 | 40 | 20 | 560 | 1,1 |

## Revendications

1. Utilisation d'amidon thermoplastique pour la fabrication d'un film ultra-fin imper respirant et adhésif,
ledit amidon thermoplastique se présentant sous la forme d'un alliage avec du TPE hydrophile comprenant au moins 10%, de préférence au moins 20%, de préférence au moins 30%, de préférence au moins 40%, de préférence au moins 50%, en poids de polyéthylène glycol (PEG) sur le poids du TPE, ledit film ayant une épaisseur inférieure ou égale à 25 µm.

2. Utilisation selon la revendication 1, dans lequel le pourcentage d'amidon thermoplastique représente de 10% à 90% du poids de l'alliage, de préférence de 30 à 80%, de préférence encore de 40 à 70 %, de préférence encore de 50 à 70 % du poids de l'alliage.

3. Utilisation selon l'une des revendications précédentes, dans laquelle le TPE hydrophile comprend :
- de 1 à 100 %, de préférence de 50 à 100%, de copolymère à blocs polyuréthanes et blocs PEG (TPU) et
- de 99 à 0 %, de préférence de 50 à 0% d'au moins un autre TPE hydrophile choisi parmi les copolymères à blocs polyamide et blocs PEG (PEBA), les copolymères à blocs polyesters et blocs PEG (COPE), et leurs mélanges,
sur le poids du TPE hydrophile.

4. Film ultra fin, imper respirant et adhésif, **caractérisé en ce qu'**il comprend un alliage d'amidon thermoplastique et de TPE hydrophile, ledit TPE comprenant au moins 10%, de préférence au moins 20%, de préférence au moins 30%, de préférence au moins 40%, de préférence au moins 50%, en poids de polyéthylène glycol (PEG) sur le poids du TPE, ledit film ayant une épaisseur inférieure ou égale à 25 µm.

5. Film selon la revendication 4, dans lequel :
- le pourcentage d'amidon thermoplastique représente 10% à 90%,
- le pourcentage de TPE hydrophile représente de 90% à 10%,
du poids de l'alliage.

6. Film selon la revendication 4 ou 5, comprenant en outre une polyoléfine fonctionnalisée comportant un greffage par un monomère choisi dans le groupe comprenant les acides carboxyliques insaturés, les anhydrides carboxyliques insaturés, les monomères vinyliques, les monomères acryliques, ou un mélange de ceux-ci.

7. Film imper respirant selon la revendication 6, dans lequel la polyoléfine fonctionnalisée est choisie dans le groupe comprenant les copolymères éthylène-ester acrylique, les copolymères éthylène-ester acrylique-anhydride maléique, les copolymères éthylène-ester acrylique-méthacrylate de glycidyle.

8. Film imper respirant selon l'une des revendications 4 à 7, dans lequel le film a une épaisseur inférieure ou égale à 25 µm, de préférence comprise dans la gamme de 5 à 25 µm.

9. Procédé de fabrication du film selon l'une des revendications 4 à 8, comprenant les étapes de :
a) mise à disposition d'un mélange d'amidon, de plastifiant et d'eau ;
b) mise à disposition de TPE hydrophile tel que défini par l'une quelconque des revendications 1 ou 3
c) extrusion du mélange de l'étape a) puis ajout du TPE de l'étape b) au mélange en fin d'extrusion,
d) étirement du mélange pour former un film.

10. Procédé selon la revendication 9, dans lequel l'étape d'étirement du mélange est effectuée par extrusion soufflage.

11. Procédé selon la revendication 9, dans lequel l'étape d'étirement du mélange est effectuée par extrusion à plat.

12. Procédé selon l'une quelconque des revendications 9 à 11, dans lequel l'étape c) est effectuée à une température comprise dans la gamme de 100°C à 300°C, de préférence de 150 à 250°C.

13. Produit stratifié comprenant au moins un matériau textile et au moins un film imper respirant selon l'une des revendications 4 à 8, ledit film adhérent sur au moins une surface du matériau textile avec une force de pelage comprise dans la gamme de 0,5 à 50 N, de préférence de 0,5 à 10 N.

14. Stratifié selon la revendication 13, dans lequel ledit au moins un matériau textile se présente sous la forme d'une membrane poreuse, d'un textile tissé ou d'un textile non tissé.

15. Stratifié selon la revendication 13 ou 14, dans lequel ledit au moins un matériau textile comprend des fibres synthétiques, notamment des fibres synthétiques obtenues à partir de matières premières bio-ressourcées, des fibres naturelles, des fibres artificielles fabriquées à partir de matières premières naturelles, des fibres minérales, et/ou des fibres métalliques.

16. Stratifié selon l'une quelconque des revendications 13 à 15, dans lequel ledit au moins un matériau textile constitue un feutre, un filtre, un film, une gaze, une toile, un pansement, une couche, un tissu, un tricot, un article d'habillement, un vêtement, un article de literie, un article d'ameublement, un rideau, un revêtement d'habitacle, un textile technique fonctionnel, un géotextile, et/ou un agrotextile.

17. Utilisation d'un film selon l'une quelconque des revendications 4 à 8 dans le domaine médical, l'hygiène, la bagagerie, la confection, l'habillement, l'équipement ménager ou de la maison, l'ameublement, les moquettes, l'automobile, l'industrie, notamment la filtration industrielle, l'agriculture et/ou le bâtiment.

## Patentansprüche

1. Verwendung von thermoplastischer Stärke zur Herstellung eines ultradünnen atmungsaktiven und klebenden Films,
wobei die thermoplastische Stärke in Form einer Legierung mit einem hydrophilen TPE vorliegt, die mindestens 10 Gew.-%, vorzugsweise mindestens 20 Gew.-%, bevorzugt mindestens 30 Gew.-%, bevorzugt mindestens 40 Gew.-%, bevorzugt mindestens 50 Gew.-% Polyethylenglykol (PEG), bezogen auf das Gewicht des TPE, umfasst, wobei der Film eine Dicke von weniger als oder gleich 25 µm hat.

2. Verwendung nach Anspruch 1, wobei der prozentuale Anteil an thermoplastischer Stärke 10 bis 90 Gew.-%, bezogen auf das Gewicht der Legierung, vorzugsweise 30 bis 80 Gew.-%, noch stärker bevorzugt 40 bis 70 Gew.-%, noch stärker bevorzugt 50 bis 70 Gew.-%, bezogen auf das Gewicht der Legierung, ausmacht.

3. Verwendung nach einem der vorhergehenden Ansprüche,
wobei der hydrophile TPE Folgendes umfasst:
- 1 bis 100 Gew.-%, vorzugsweise 50 bis 100 Gew.-% Copolymer mit Polyurethanblöcken und PEG-Blöcken (TPU) und
- 99 bis 0 Gew.-%, vorzugsweise 50 bis 0 Gew.-%, mindestens eines anderen hydrophilen TPE, ausgewählt aus Copolymeren mit Polyamidblöcken und PEG-Blöcken (PEBA), Copolymeren mit Polyesterblöcken und PEG-Blöcken (COPE) und deren Gemischen,
bezogen auf das Gewicht des hydrophilen TPE.

4. Ultradünner atmungsaktiver und klebender Film, **dadurch gekennzeichnet, dass** er eine Legierung aus thermoplastischer Stärke und hydrophilem TPE umfasst, wobei der TPE mindestens 10 Gew.-%, vorzugsweise mindestens 20 Gew.-%, vorzugsweise mindestens 30 Gew.-%, bevorzugt mindestens 40 Gew.-%, bevorzugt mindestens 50 Gew.-% Polyethylenglykol (PEG), bezogen auf das Gewicht des TPE, umfasst, wobei der Film eine Dicke von weniger als oder gleich 25 µm hat.

5. Film nach Anspruch 4, wobei:
- der prozentuale Anteil an thermoplastischer Stärke 10 bis 90 Gew.-%,
- der prozentuale Anteil an hydrophilem TPE 90 bis 10 Gew.-%,
bezogen auf das Gewicht der Legierung, beträgt.

6. Film nach Anspruch 4 oder 5, der außerdem ein funktionalisiertes Polyolefin umfasst, das eine Pfropfung mit einem Monomer umfasst, ausgewählt aus der Gruppe, die ungesättigte Carbonsäuren, ungesättigte Carbonsäureanhydride, Vinylmonomere, Acrylmonomere oder ein Gemisch von diesen umfasst.

7. Atmungsaktiver Film nach Anspruch 6, wobei das funktionalisierte Polyolefin aus der Gruppe ausgewählt ist, die Ethylen-Acrylsäureester-Copolymere, Ethylen-Acrylsäureester-Maleinsäureanhydrid-Copolymere und Ethylen-Acrylsäureester-Glycidylmethacrylat-Copolymere umfasst.

8. Atmungsaktiver Film nach einem der Ansprüche 4 bis 7, wobei der Film eine Dicke von weniger als oder gleich 25 µm, vorzugsweise im Bereich von 5 bis 25 µm aufweist.

9. Verfahren zur Herstellung des Films nach einem der Ansprüche 4 bis 8, bei dem man in den folgenden Schritten:
a) ein Gemisch aus Stärke, Weichmacher und Wasser bereitstellt;
b) hydrophilen TPE nach einem der Ansprüche 1 oder 3 bereitstellen;
c) das Gemisch von Schritt a) extrudiert und anschließend den TPE von Schritt b) am Ende der Extrusion zu dem Gemisch hinzugibt;
d) das Gemisch unter Bildung eines Films streckt.

10. Verfahren nach Anspruch 9, wobei der Schritt des Streckens des Gemischs mittels Extrusionsblasformen durchgeführt wird.

11. Verfahren nach Anspruch 9, wobei der Schritt des Streckens des Gemischs mittels Flachstrangpressen durchgeführt wird.

12. Verfahren nach einem der Ansprüche 9 bis 11, wobei Schritt c) bei einer Temperatur im Bereich von 100°C bis 300°C, vorzugsweise von 150 bis 250°C durchgeführt wird.

13. Laminiertes Produkt, das mindestens ein Textilmaterial und mindestens einen atmungsaktiven Film nach einem der Ansprüche 4 bis 8 umfasst, wobei der Film an mindestens einer Oberfläche des Textilmaterials mit einer Schälkraft im Bereich von 0,5 bis 50 N, vorzugsweise von 0,5 bis 10 N haftet.

14. Laminat nach Anspruch 13, wobei das mindestens eine Textilmaterial in Form einer porösen Membran, eines gewebten Textils oder eines Vliesstoffs vorliegt.

15. Laminat nach Anspruch 13 oder 14, wobei das mindestens eine Textilmaterial synthetische Fasern, insbesondere aus Ausgangsmaterialien biologischen Ursprungs erhaltene synthetische Fasern, Naturfasern, aus natürlichen Ausgangsmaterialien hergestellte Kunstfasern, Mineralfasern und/oder Metallfasern umfasst.

16. Laminat nach einem der Ansprüche 13 bis 15, wobei das mindestens eine Textilmaterial einen Filz, einen Filter, einen Film, eine Gaze, ein Tuch, eine Wundauflage, eine Schicht, einen Stoff, eine Strickware, ein Bekleidungsstück, ein Kleidungsstück, eine Bettwäsche, ein Möbelstück, einen Vorhang, eine Innenraumverkleidung, ein funktionelles technisches Textil, ein Geotextil und/oder ein Agrotextil bildet.

17. Verwendung eines Films nach einem der Ansprüche 4 bis 8 auf dem Gebiet der Medizin, der Hygiene, der Gepäckstücke, der Kleidungsherstellung, der Bekleidung, des Haushalts oder für das Haus, der Möblierung, der Teppichböden, der Automobile, der Industrie, insbesondere der industriellen Filtration, der Landwirtschaft und/oder des Bauwesens.

## Claims

1. The use of thermoplastic starch in the manufacture of an adhesive and ultrathin waterproof-breathable film, said thermoplastic starch being provided in the form of an alloy with hydrophilic TPE comprising at least 10% by weight, preferably at least 20% by weight, preferably at least 30% by weight, preferably at least 40% by weight, preferably at least 50% by weight, of polyethylene glycol (PEG), with regard to the weight of the TPE, said film having a thickness of less than or equal to 25 µm.

2. The use as claimed in claim 1, in which the percentage of thermoplastic starch represents from 10% to 90% of the weight of the alloy, preferably from 30% to 80%, more preferably from 40% to 70%, more preferably from 50% to 70% of the weight of the alloy.

3. The use as claimed in either of the preceding claims, in which the hydrophilic TPE comprises:
- from 1% to 100%, preferably from 50% to 100%, of copolymer comprising polyurethane blocks and PEG blocks (TPUs) and
- from 99% to 0%, preferably from 50% to 0%, of at least one other hydrophilic TPE chosen from copolymers comprising polyamide blocks and PEG blocks (PEBAs), copolymers comprising polyester blocks and PEG blocks (COPEs) and their blends, with regard to the weight of the hydrophilic TPE.

4. An adhesive and ultrathin waterproof-breathable film, **characterized in that** it comprises an alloy of thermoplastic starch and of hydrophilic TPE, said TPE comprising at least 10% by weight, preferably at least 20% by weight, preferably at least 30% by weight, preferably at least 40% by weight, preferably at least 50% by weight, of polyethylene glycol (PEG), with regard to the weight of the TPE.

5. The film as claimed in claim 4, in which:
- the percentage of thermoplastic starch represents from 10% to 90%,
- the percentage of hydrophilic TPE represents from 90% to 10%,
of the weight of the alloy.

6. The film as claimed in claim 4 or 5, additionally comprising a functionalized polyolefin comprising a grafting by a monomer chosen from the group consisting of unsaturated carboxylic acids, unsaturated carboxylic anhydrides, vinyl monomers, acrylic monomers and a mixture of these.

7. The waterproof-breathable film as claimed in claim 6, in which the functionalized polyolefin is chosen from the group consisting of ethylene/acrylic ester copolymers, ethylene/acrylic ester/maleic anhydride copolymers and ethylene/acrylic ester/glycidyl methacrylate copolymers.

8. The waterproof-breathable film as claimed in one of claims 4 to 7, in which the film has a thickness of less than or equal to 25 µm, preferably within the range from 5 to 25 µm.

9. A process for the manufacture of the film as claimed in one of claims 4 to 8, comprising the stages of:
a) making available a blend of starch, of plasticizer and of water;
b) making available the hydrophilic TPE as defined by either one of claims 1 and 3;
c) extruding the blend of stage a) and then adding the TPE of stage b) to the blend at the end of extrusion;
d) drawing the blend in order to form a film.

10. The process as claimed in claim 9, in which the stage of drawing the blend is carried out by extrusion/blow molding.

11. The process as claimed in claim 9, in which the stage of drawing the blend is carried out by cast film extrusion.

12. The process as claimed in any one of claims 9 to 11, in which stage c) is carried out at a temperature within the range from 100°C to 300°C, preferably from 150°C to 250°C.

13. A laminated product comprising at least one textile material and at least one waterproof-breathable film as claimed in one of claims 4 to 8, said film adhering to at least one surface of the textile material with a peel strength within the range from 0.5 to 50 N, preferably from 0.5 to 10 N.

14. The laminate as claimed in claim 13, in which said at least one textile material is provided in the form of a porous membrane, of a woven textile or of a nonwoven textile.

15. The laminate as claimed in claim 13 or 14, in which said at least one textile material comprises synthetic fibers, in particular synthetic fibers obtained from bioresourced starting materials, natural fibers, artificial fibers manufactured from natural starting materials, mineral fibers and/or metal fibers.

16. The laminate as claimed in any one of claims 13 to 15, in which said at least one textile material constitutes a felt, a filter, a film, a gauze, a cloth, a dressing, a layer, a fabric, an item of knitwear, an item of clothing, a garment, an item of bedding, an item of furniture, a curtain, a compartment covering, a functional technical textile, a geotextile and/or an agrotextile.

17. The use of a film as claimed in any one of claims 4 to 8 in the medical field, hygiene, luggage, the clothing industry, the garment industry, domestic or household equipment, furniture, fitted carpets, the automobile industry, industry, in particular industrial filtration, agriculture and/or the construction industry.
